Europäisches Patentamt

European Patent Office

Office européen des brevets

(19)

(11) Numéro de publication : **0 161 960**
**B1**

(12) **FASCICULE DE BREVET EUROPÉEN**

(45) Date de publication du fascicule du brevet :
15.03.89

(51) Int. Cl.⁴ : **G 07 F 7/06, A 47 F 10/04**

(21) Numéro de dépôt : **85400709.3**

(22) Date de dépôt : **09.04.85**

(54) **Installation pour la consignation de chariots.**

(30) Priorité : **17.04.84 FR 8406525**

(43) Date de publication de la demande :
**21.11.85 Bulletin 85/47**

(45) Mention de la délivrance du brevet :
**15.03.89 Bulletin 89/11**

(84) Etats contractants désignés :
**BE DE GB IT NL**

(56) Documents cités :
**FR-A- 2 254 837**
**FR-A- 2 257 965**
**FR-A- 2 507 881**
**US-A- 3 165 189**
**US-A- 3 194 377**
**US-A- 3 978 959**

(73) Titulaire : **Benites, Henri**
**12 avenue Lou Castellet**
**F-84140 Montfavet (FR)**

(72) Inventeur : **Benites, Henri**
**12 avenue Lou Castellet**
**F-84140 Montfavet (FR)**

(74) Mandataire : **Bugnon-Hays, Claudine**
**PATCO S.A. 39, Boulevard René Cassin B.P. 4**
**F-84170 Monteux (FR)**

## Description

La présente invention concerne une installation pour la consignation de chariots notamment de chariots destinés aux clients des magasins à grandes surfaces pour collectionner leurs achats.

Pour éviter la substitution fréquente des chariots et leur dispersion sur les parkings des magasins, on a déjà conçu des installations de distribution et/ou de consignation dans lesquelles les chariots sont retenus par une serrure fixe dans un espace de garage. La serrure est actionnée par un jeton ou par une pièce de monnaie pour libérer un chariot. Dans ce cas, les jetons ou pièces de monnaie sont collectionnés dans un coffret disposé au niveau de la serrure qui fait alors l'objet d'effractions ou de détériorations fréquentes. De plus, les monnayeurs utilisés pour l'actionnement de la serrure peuvent être actionnés aisément par des pièces quelconques et sont très souvent détériorés par de telles tentatives d'utilisation.

Le brevet français n° 2 507 881 décrit une telle installation de consignation dans laquelle un boîtier, solidaire du chariot, renferme un système de verrouillage et des tringles coulissantes coopérant avec une paire de rails parallèles délimitant l'aire de stationnement des chariots.

La présente invention a pour objet de concevoir une installation permettant de remédier auxdits inconvénients des installations connues.

L'installation selon l'invention comprend un espace de garage comportant au sol un chemin de roulement muni de rails pour le guidage des roues des chariots à consigner qui est fermé sur trois de ses côtés par des éléments de barrières tandis que le quatrième côté de l'espace est fermé par un portique dont l'un des montants comporte à une hauteur prédéterminée un organe de clef et de retenue destiné à coopérer avec une serrure prévue sur le montant vertical correspondant du chariot, ladite serrure comprenant un canal horizontal la traversant de part en part et dont la section correspond à celle dudit élément de clef, un volet monté mobile en direction verticale et permettant, sous l'action d'un ressort de rappel, d'obturer ledit canal, une fente pour l'introduction d'un jeton qui, lorsqu'il est engagé dans ladite fente, amène ledit volet dans sa position active pour dégager ledit canal, un organe de verrouillage permettant de retenir ledit jeton dans la fente et qui libère le jeton lorsque ledit organe de clef est engagé dans le canal de la serrure.

Grâce à l'installation selon l'invention, l'espace de garage ne comporte que l'élément de clef d'une structure simple. La serrure actionnée par le jeton est située sur le chariot et se trouve ainsi sous la surveillance de l'utilisateur. Pendant l'utilisation, le jeton est verrouillé dans la serrure et ne peut pas ainsi être substitué et perdu par inadvertance. L'utilisateur ne peut récupérer son jeton qu'après avoir restitué le chariot dans l'espace de garage et après le verrouillage du chariot dans cet espace.

Suivant un mode de réalisation préféré de l'invention, ladite serrure comporte de plus un organe de déverrouillage qui amène ledit organe de verrouillage dans sa position de repos lorsque ledit organe de clef est engagé dans l'extrémité intérieure dudit canal pour ainsi libérer ledit jeton.

Ceci rend très difficile toute violation de la serrure en vue de la récupération illicite du jeton.

Avantageusement, ledit organe de déverrouillage est de plus monté, par une partie intermédiaire, pivotant autour d'un axe horizontal transversal et présente dans sa partie supérieure une surface de guidage coopérant avec la partie supérieure dudit volet qui commande ainsi un pivotement de l'organe de déverrouillage lorsqu'il est avancé vers le bas au-delà de sa position de dégagement du canal de la serrure et dans ce cas, ledit organe de clef comporte une came supérieure commandant un déplacement vers le haut de l'organe de déverrouillage et une came inférieure commandant un abaissement du volet au-delà de sa position de dégagement du canal.

De cette manière, le déverrouillage du jeton nécessite deux opérations consécutives, ce qui augmente la protection de la serrure contre toute effraction.

Suivant un mode de réalisation particulièrement avantageux, ledit organe de verrouillage sert également à verrouiller ledit volet dans sa position supérieure dans laquelle il obture ledit canal et comprend une came supérieure coopérant avec le jeton pour libérer le volet.

Un seul organe de verrouillage assure ainsi le verrouillage du volet en position d'obturation du canal de la serrure et le verrouillage du jeton pendant l'utilisation du chariot.

Dans ce cas, ledit jeton comporte, selon l'invention, au voisinage de son extrémité inférieure, un bossage destiné à coopérer avec ladite came de l'organe de verrouillage, une encoche inférieure destinée à recevoir la partie de verrouillage de l'organe et une encoche supérieure recevant la came de l'organe lorsque le jeton est verrouillé dans sa position inférieure dans laquelle il repousse le volet vers le bas pour dégager le canal.

De préférence, ledit jeton présente une section verticale sensiblement rectangulaire.

De cette manière, le jeton présente une configuration relativement simple permettant de nombreuses variantes mais l'effraction de la serrure par d'autres organes ou outils reste très difficile.

D'autres réalisations et avantages de l'invention ressortiront de la description qui va suivre et en se référant aux dessins annexés montrant, à titre d'exemple, un mode de réalisation préféré de l'installation selon l'invention. Sur ces dessins :

la figure 1 est une vue en perspective schématique de l'espace de garage de l'installation selon l'invention,

la figure 2 est une vue en élévation frontale schématique de l'espace représenté à la figure 1 avec un chariot garé dans cet espace,

les figures 3 à 5 sont des vues en élévation latérale des organes mobiles de la serrure prévue selon l'invention sur le chariot à consigner dans différentes positions de service, sur ces figures, le boîtier de la serrure n'est pas représenté et

la figure 6 est une vue en coupe verticale longitudinale de la clef de l'installation selon l'invention.

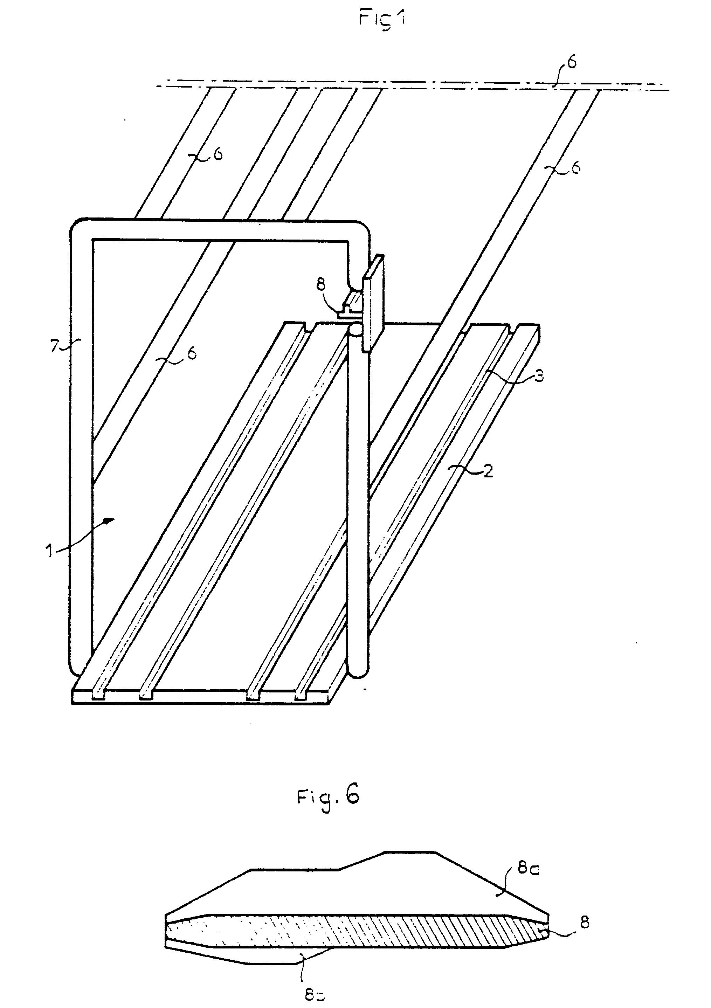

L'installation selon l'invention représentée à la figure 1, comporte un espace de garage portant la référence générale (1) et qui est destiné à recevoir plusieurs chariots (5) à consigner. L'espace de garage (1) est constitué d'un chemin de roulement (2) disposé au sol et qui comprend une série de rails (3) pour le guidage des roues (4) des chariots (5). Dans le mode de réalisation représenté ici, le chemin de roulement (2) comprend deux paires de rails car les chariots (5) présentent des roues avant et des roues arrières d'écartement différent.

L'espace de garage (1) est fermé, à son extrémité arrière et sur ses côtés latéraux, par des barrières (6) tandis que son extrémité avant est délimitée par un portique (7) dont l'un des montants porte un élément de clef fixe (8) destiné à coopérer avec une serrure (9) prévue sur chacun des chariots (5) comme décrit plus loin.

Comme représenté à la figure 6, l'élément de clef (8) comporte une plaque horizontale munie d'une came verticale supérieure (8a) et d'une came horizontale inférieure (8b). La serrure (9) comporte un canal horizontal (10) la traversant de part en part et dont la section correspond sensiblement à celle de l'élément de clef (8). La serrure (9) est disposée sur chaque chariot (5) à une hauteur telle que l'élément de clef (8) est engagé dans le canal (10) lorsque le chariot est avancé entre les deux montants du portique (7).

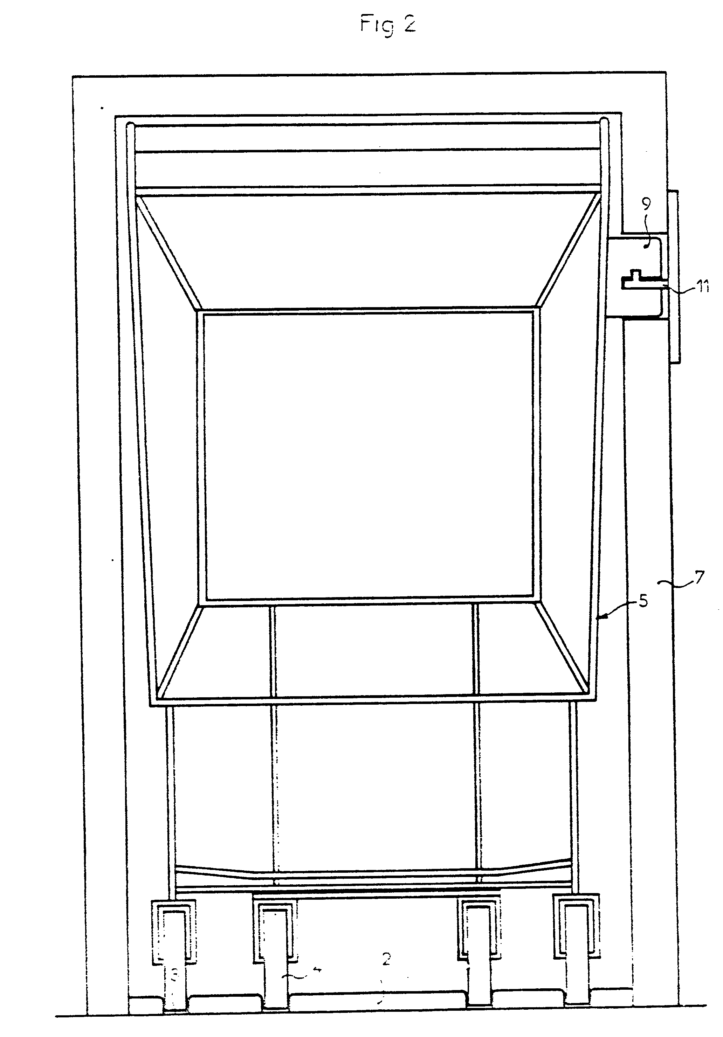

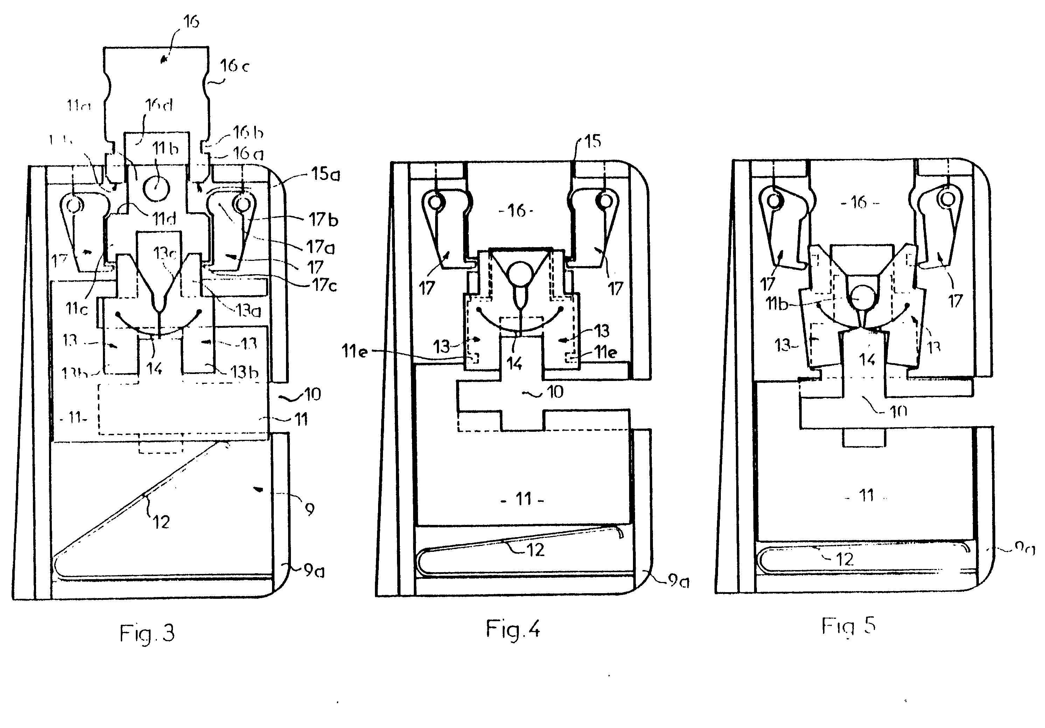

La serrure de l'installation selon l'invention est représentée plus en détail aux figures 3 à 5. Elle comporte un boîtier (9a) fixé sur un montant latéral du chariot (5) comme représenté à la figure 2. A l'intérieur du boîtier (9a), est prévu dans la partie inférieure de la serrure (9), un volet (11) mobile en direction verticale. Au-dessous du volet (11) est situé un ressort de rappel (12) tendant à amener le volet dans sa position supérieure dans laquelle il obture un canal (10) comme représenté à la figure 3 et s'oppose ainsi au passage de la clef (8) à travers ce canal (10). Le chariot est ainsi retenu par la clef dans l'espace de garage (1).

Dans la partie supérieure, la serrure comporte un organe de verrouillage (17) mobile contre l'action d'un ressort de rappel (14), une fente (15) pour l'introduction d'un jeton (16) destiné à actionner la serrure et un organe de verrouillage (17). Dans le mode de réalisation représenté ici, les organes de verrouillage (17) et de déverrouillage (13) sont constitués chacun de deux pièces identiques disposées symétriquement d'un côté et de l'autre de la fente ou du prolongement de celle-ci. Pour des raisons de simplicité, on décrira ci-dessous une seule des deux paires de pièces.

Comme on le voit le mieux à la figure 3, le volet comporte une partie supérieure extrême (11a) s'étendant avant l'introduction du jeton (16) au niveau de l'extrémité supérieure de la fente (15) et qui est moins large que celle-ci de sorte à obtenir deux ouvertures latérales (15a, 15b). La partie (11a) porte un taquet transversal (11b) pour l'actionnement de l'organe de déverrouillage comme décrit plus loin. Au-dessous de la partie (11a), le volet présente une partie plus large (11c) délimitant deux épaulements (11d). A l'extrémité inférieure de la partie (11c) sont prévues deux encoches latérales (11e).

Chaque pièce de l'organe de verrouillage (17) est constituée d'un bras monté pivotant autour d'un axe horizontal transversal contre l'action d'un ressort de rappel (17b) tendant à faire pivoter le bras en direction de la fente (15). A son extrémité supérieure, le bras présente une came (17a) s'étendant au repos dans la fente (15) tandis qu'à son extrémité inférieure, il présente un doigt de verrouillage (17c).

Chaque pièce de l'organe de déverrouillage (13) comporte une branche supérieure (13a) s'étendant en regard du doigt (17c) et une branche inférieure (13b) dont la face inférieure s'étend au niveau du bord de la partie supérieure du canal (10) de la serrure. La pièce est montée par sa partie centrale pivotante autour d'un axe horizontal transversal et est amenée en repos par le ressort de rappel dans une position dans laquelle la face intérieure de la branche inférieure (13b) s'étend au niveau du bord du canal (10) comme représenté aux figures 3 et 4. La branche supérieure (13a) présente une face intérieure de guidage inclinée (13c) destinée à coopérer avec le taquet (11b) du volet (11).

Le jeton (16) pour l'actionnement de la serrure (9) est constitué d'une pièce plate d'une configuration générale rectangulaire. Il présente à son extrémité inférieure une encoche (16d) dont la configuration correspond à celle de la partie supérieure (11a) du volet (11). Sur chaque face latérale, le jeton (16) comporte un bossage inférieur (16a), une encoche inférieure (16b) et une encoche supérieure (16c).

L'installation selon l'invention est utilisée et fonctionne de la manière suivante :

Lorsque le chariot (5) est disposé dans l'espace de garage (1) et qu'aucun jeton (16) n'est introduit dans la fente (15) de la serrure (9), le volet (11) est amené par son ressort de rappel dans sa position supérieure dans laquelle il obture le canal (10) comme représenté à la figure 3. Le chariot (5) est retenu dans l'espace (1) par l'élément de clef (8).

Pour libérer un chariot (5), l'utilisateur introduit un jeton (16) dans la fente (15) de la serrure (9) prévue sur chaque chariot (5). Le bossage (16a) du jeton coopère alors avec la came (17a) de l'organe de verrouillage (17) dont le doigt (17c) est dégagé contre l'action du ressort de rappel (17b) de l'encoche (11e) du volet (11). L'extrémité inférieure du jeton (16) bute ensuite sur l'épaulement (11d) du volet (11) et en enfonçant le jeton (16) dans la fente (15), on repousse le volet (11) dans sa position inférieure dans laquelle il dégage le canal (10). On peut alors retirer le chariot (5) de l'espace (1) car l'élément de clef (8) passe librement à travers le canal (10) de la serrure (9).

Lorsque le jeton (16) est totalement engagé dans la fente (15), le doigt (17c) de l'organe de verrouillage (17) est engagé sous l'action du ressort (17b) dans l'encoche inférieure (16b) du jeton tandis que la came (17a) vient se loger dans l'encoche supérieure (16c) du jeton. Pendant toute l'utilisation du chariot (5), le jeton (16) se trouve ainsi verrouillé dans la serrure et ne peut ainsi pas être substitué.

Après l'usage du chariot lorsque l'utilisateur veut restituer celui-ci, il l'engage par ses roues avant dans les rails (3) de l'espace (1) et l'avance dans celui-ci. L'élément de clef (8) se trouve ainsi engagé dans le canal (10) de la serrure qui est dégagée. Lors du passage de la clef (8) à travers le canal (10), la came supérieure (8a) de la clef repousse d'abord l'organe de déverrouillage (13) légèrement vers le haut et la came inférieure (8b) de la clef repousse le volet (11) vers le bas au-delà de sa position inférieure de dégagement. A ce moment, le taquet (11b) du volet coopère avec la surface de guidage (13c) de l'organe (13) et fait pivoter le bras supérieur (13a) vers l'extérieur qui dégage à son tour le doigt (17c) de l'organe de verrouillage (17) de l'encoche inférieure (16b) du jeton qui est ainsi libéré (figure 5).

Le ressort de rappel (12) amène alors le volet (11) dans sa position supérieure. Le volet repousse le jeton (16) à l'extérieur de la fente (15) et obture de nouveau le canal (10) de la serrure (9).

L'utilisateur peut maintenant récupérer son jeton (16) et le chariot (5) se trouve retenu par la clef (8) dans l'espace de garage (1).

La configuration géométrique du jeton peut bien entendu être différente de celle représentée ici à condition qu'elle remplisse les fonctions décrites ci-dessus.

## Revendications

1. Installation pour la consignation de chariots notamment de chariots destinés aux clients des magasins à grandes surfaces pour collectionner leurs achats du type comprenant une serrure (9) solidaire du chariot et coopérant solidairement par l'intermédiaire d'un élément de retenue (8), avec un espace de garage (1) fermé sur trois côtés par des éléments de barrière (6), caractérisée en ce que ledit espace de garage (1) comporte au sol un chemin de roulement (2) muni de rails (3) pour le guidage des roues (4) des chariots (5) à consigner, le quatrième côté de l'espace (1) étant fermé par un portique (7) dont l'un des montants comporte à une hauteur prédéterminée ledit élément de clef et de retenue (8) destiné à coopérer avec ladite serrure (9) prévue sur le montant vertical correspondant du chariot (5), ladite serrure (9) comprenant un canal horizontal (10) la traversant de part en part et dont la section correspond à celle dudit élément de clef (8), un volet (11) monté mobile en direction verticale et permettant, sous l'action d'un ressort de rappel (12), d'obturer ledit canal (10), une fente (15) pour l'introduction d'un jeton (16) qui, lorsqu'il est engagé dans ladite fente (15), amène ledit volet (11) dans sa position active pour dégager ledit canal (10), un organe de verrouillage (17) permettant de retenir ledit jeton (16) dans la fente (15) et qui libère le jeton (16) lorsque ledit organe de clef (8) est engagé dans le canal (10) de la serrure (9).

2. Installation suivant la revendication 1, caractérisée en ce que ladite serrure (9) comporte de plus un organe de déverrouillage (13) qui amène ledit organe de verrouillage (17) dans sa position de repos lorsque ledit organe de clef (8) est engagé dans l'extrémité intérieure dudit canal (10) pour ainsi libérer ledit jeton (16).

3. Installation suivant la revendication 2, caractérisée en ce que ledit organe de déverrouillage (13) est de plus monté, par une partie intermédiaire, pivotant autour d'un axe horizontal transversal et présente dans sa partie supérieure une surface de guidage coopérant avec la partie supérieure dudit volet (11) qui commande ainsi un pivotement de l'organe de déverrouillage (13) lorsqu'il est avancé vers le bas au-delà de sa position de dégagement du canal (10) de la serrure.

4. Installation suivant la revendication 3, caractérisée en ce que ledit organe de clef (8) comporte une came supérieure (8a) commandant un déplacement vers le haut de l'organe de déverrouillage (13) et une came inférieure (8b) commandant un abaissement du volet (11) au-delà de sa position de dégagement du canal (10).

5. Installation suivant l'une quelconque des revendications 1 à 4, caractérisée en ce que ledit organe de verrouillage (17) sert également à verrouiller ledit volet (11) dans sa position supérieure dans laquelle il obture ledit canal (10) et comprend une came supérieure (17a) coopérant avec le jeton (16) pour libérer le volet (11).

6. Installation suivant la revendication 5, caractérisée en ce que ledit jeton (16) comporte au voisinage de son extrémité inférieure, un bossage (16a) destiné à coopérer avec ladite came (17a) de l'organe de verrouillage (17), une encoche inférieure (16b) destinée à recevoir la partie de verrouillage de l'organe (17) et une encoche supérieure (16c) recevant la came (17a) de l'organe (17) lorsque le jeton est verrouillé dans sa position inférieure dans laquelle il repousse le volet (11) vers le bas pour dégager le canal (10).

7. Installation suivant l'une quelconque des revendications 1 à 6, caractérisée en ce que ledit jeton (16) présente une section verticale sensiblement rectangulaire.

## Claims

1. A system for consigning trolleys, mode particularly the shopping trolleys intended for use by customers in supermarkets to collect their purchases, of the type comprising a lock (9) being integral with the trolley, and, via a retention member (8), jointly cooperating with a storing area (1) closed on three sides by barrier members (6), characterized in that said storing area (1) has a ground runway (2) comprising rails (3) for guiding the wheels (4) of the trolleys to be consigned, the fourth side of the area (1) being closed by a gantry (7), one leg of which, at a predetermined height, has said key and retention member (8) designed to cooperate with said lock (9) provided on the matching vertical member of the trolley (5), said lock (9) having a horizontal through canal (10) and the section of which matches that of said key member (8), a shutter (11) being vertically slidable and, under the action of a return spring (12), permitting to obturate said canal (10), a slot (15) to receive a token (16) that, when engaged in said slot (15), moves said shutter (11) to its operative position to clear said canal (10), locking means (17) permitting to retain said token (16) within the slot (15) and liberating the token (16) when said key means (8) is introduced into the canal (10) of the lock (9).

2. A system according to Claim 1, characterized in that said lock (9) further comprises unlocking means (13) that moves said locking means (17) to its rest position, when said key means (8) is engaged into the inner end of said canal (10) to thus liberate said token (16).

3. A system according to Claim 2, characterized in that said unlocking means (13), via an intermediate member, is further pivotably mounted around a transverse horizontal axis and, at its upper portion, has a guiding surface cooperating with the upper portion of said shutter (11) that thus controls a pivoting of the unlocking means (13) when it is moved downwards beyond the lock canal (10) clearing position.

4. A system according to Claim 3, characterized in that said key means (8) has a upper cam (8a) controlling the upward motion of the unlocking means (13) an a bottom cam (8b) controlling the downward motion of the shutter (11) beyond the canal (10) clearing position.

5. A system according to any Claim 1 through 4, characterized in that said locking means (17) also serves the purpose of locking said shutter (11) in its upper position in which it closes said canal (10) and comprises a upper cam (17a) cooperating with the token (16) to liberate the shutter (11).

6. A system according to Claim 5, characterized in that said token, in the vicinity of its lower end, has a boss (16a) intended to cooperate with said cam (17a) of the locking means (17), a bottom slot (16b) intended to receive the locking portion of means (17) and a top slot (16c) to receive the cam (17a) of means (17) when the token is locked in its bottom position in which it pushes the shutter (11) downward in order to clear the canal (10).

7. A system according to any Claim 1 through 6, characterized in that said token (16) has a substantially rectangular vertical section.

## Patentansprüche

1. Anlage für die Aufbewahrung von Korbwagen, besonders solche Korbwagen, die Einkäufer in Supermärkten brauchen, um ihre Einkäufe zu sammeln, in der Bauart, die ein Schloß (9) aufweist, das mit dem Wagen verbunden ist und das, durch ein Rückhaltsglied (8) mit einem Garageraum (1) zusammenwirkt, welcher auf drei Seiten durch Barrierglieder (6) abgesperrt ist, damit gekennzeichnet, daß der Garageraum (1) eine Bodenschienebahn (2) aufweist, die mit Schienen (3) zum Führen der Räder (4) der Wagen (5), die aufzubewahren sind, versehen ist, wobei der vierte Seite des Raums (1) von einem Portal (7) geschlossen ist, deren ein Bein an einer vorbestimmten Höhe das Schlüssels- und Rückhaltsglied (8) aufweist, das zum Zusammenwirken mit dem auf dem entsprechenden Wagenständer (5) vorgesehenen Schloß (9) bestimmt ist ; dabei enthält das Schloß (9) einen horizontalem Kanal (10), durch das Schloß gehend, und dessen Durchschnitt dem Durchschnitt des Schlüsselsglieds (8) entspricht ; einem vertikal beweglichen Verschlußklappe (11) die, unter der Wirkung einer Spannfeder (12) den Kanal (10) verschliessen kann ; eine Spalte (15) zum einführen eine Münze (16) welche, wenn in der Spalte (15) eingesteckt, die Verschlußklappe (11) zu ihrer wirkenden Lage bringt, um den Kanal (10) freizumáchen ; ein Verriedgelungsglied (17), das die Münze (16) in der Spalte (15) zurückhält und die Münze (16) freigibt, wenn das Schlüsselsglied (8) in der Kanal (10) des Schloßes (9) eingeführt wird.

2. Anlage nach dem Anspruch 1, damit gekennzeichnet, daß das Schloß (9) ferner ein Entriegelungsglied (13) aufweist, das das Verrieglungstlied (17) in seine Rühelage bringt, wenn das Schlüsselsglied (8) in das innere End des Kanals (10) eingesteckt wird, um die Münze (16) freizugeben.

3. Anlage nach dem Anspruch 2, damit gekennzeichnet, daß das Entriegelungsglied (13) mittels eines Zwischenglieds drehend um eine horizontale und querlaufende Achse ferner montiert ist, und im Oberteil eine Führungsfläche aufweist, welche mit dem Oberteil der Verschlußklappe (11) zusammenwirkt, die damit das Schwenken des Entriegelungsglieds (13) bewirkt, wenn es weiter als die Freimachungslade des Schloßkanals (10) senkt.

4. Anlage nach dem Anspruch 3, damit gekennzeichnet, daß das Schlüsselsglied (8) eine obere Kurvenscheibe (8a), die ein Steigen des Entriegelungsglieds (13) bewirkt, sowie eine untere Kurvenscheibe (8b), die das Senken der Verschlußklappe (11) weiter als die Freimachungslage des Kanals (10) bewirkt, aufweist.

5. Anlage nach irgendeinem Anspruch 1-4, damit gekennzeichnet, daß das Verriegelungsglied (17) gleichzeitig dazu dient, die Verschlußklappe (11) in ihrer obere Lage, wo sie den Kanal (10) sperrt, zu verriegeln, und daß es auch eine obere Kurvenscheibe (17a) aufweist, die mit der Münze (16) zusammenwirkt, um die Verschlußklappe (11) freizugeben.

6. Anlage nach dem Anspruch 5, damit gekennzeichnet, daß die Münze (16) in der Nähe ihres unteren Endes einen Hocker (16a), der dazu bestimmt ist, mit der Kurvenscheibe (17a) des Verriegelungslieds (17) zusammenzuwirken, eine untere Ausklinkung (16b) zur Aufnahme des Verriegelungsgteils des Glieds (17), sowie eine obere Ausklinkung (16c) zur Aufnahme des Kurvenscheibe (17a) des Glieds (17), wenn die Münze in der untere Lage wo sie Verschlußklappe (11) nach unten drückt, verriegelt ist, um den Kanal (10) freizumachen, aufweist.

7. Anlage nach irgendeinem Anspruch 1-6, damit gekennzeichnet, daß die Münze (16) einen etwa rechteckigen vertikalen Querschnitt aufweist.

Fig 1

Fig. 6

Fig 2

Fig.5

Fig.4

Fig.3